# EUROPÄISCHE PATENTSCHRIFT

(11) **EP 2 815 144 B1**
(45) Veröffentlichungstag und Bekanntmachung des Hinweises auf die Patenterteilung: **21.09.2016**
(21) Anmeldenummer: 13701910.5
(22) Anmeldetag: 18.01.2013
(51) Int. Cl.: F16D 3/79, F16H 41/24

(54) **MITNEHMERBLECH ZUR DREHMOMENTÜBERTRAGUNG**
DRIVE PLATE TO TRANSMIT TORQUE
DISQUE D'ENTRAINEMENT

(30) Priorität: 14.02.2012 DE 102012002924
(43) Veröffentlichungstag der Anmeldung: 24.12.2014
(73) Patentinhaber: Audi AG, 85045 Ingolstadt (DE)
(72) Erfinder: SCHMIDT, Alexander, 85055 Ingolstadt (DE)
(74) Vertreter: Wohnert, Dietmar
(86) Internationale Anmeldenummer: PCT/EP2013/000148
(87) Internationale Veröffentlichungsnummer: WO 2013/120574

(56) Entgegenhaltungen:
- EP-A2- 1 213 507
- EP-A2- 2 048 395
- DE-A1-102010 001 554
- DE-C1- 19 857 232
- JP-A- 2008 240 801
- JP-A- 2010 281 419

## Beschreibung

Die vorliegende Erfindung betrifft ein Mitnehmerblech zur Drehmomentübertragung zwischen einem antreibenden Teil und einem abtreibenden Teil, insbesondere für Antriebsaggregate von Kraftfahrzeugen, nach dem Oberbegriff des Patentanspruches 1.

Ein derartiges Mitnehmerblech wird zur Anbindung der Kurbelwelle einer Brennkraftmaschine an den Getriebeeingang verwendet. Das Mitnehmerblech hat primär die folgenden beiden Funktionen, nämlich erstens Übertragung des Motormomentes in den Antriebsstrang und zweitens die mögliche Abkopplung von Schwingungen und Bewegungen in axialer, radialer sowie Kipprichtung. Dazu soll das Mitnehmerblech möglichst torsionssteif und biegeweich sein. Als weitere Funktion ist im Mitnehmerblech ein Anlasserzahnkranz integriert, um den Verbrennungsmotor mit einem Ritzelstarter anzulassen. Desweiteren kann das Mitnehmerblech eine Kröpfung aufweisen, um einen axialen Versatz zwischen dem Kurbelwellenflansch und einer Anschraubfläche am Getriebeeingang zu überbrücken. Zur Erfüllung dieser Funktionen ist das Mitnehmerblech üblicherweise ein Vollblech.

Die Verwendung eines solchen Vollbleches führt jedoch zu den folgenden Nachteilen: So bleibt Leichtbaupotential ungenutzt, da die Festigkeitsanforderungen an das Mitnehmerblech nicht zwangsläufig die Verwendung eines Vollbleches erfordern. Zudem reduziert die Steifigkeit des Vollbleches die mögliche Abkopplung von Schwingungen und Bewegungen in axialer, radialer sowie Kipprichtung. Außerdem stellt das Vollblech eine große vollflächige, das heißt ununterbrochene Abstrahlfläche bereit und kann daher bei entsprechender Anregung als "Lautsprecher" fungieren.

Ein Mitnehmerblech beschreibt zum Beispiel die EP 0 803 661 B1, bei dem außerhalb und innerhalb eines ringförmigen Kröpfungsabschnitts langlochförmige Ausnehmungen (vergleiche Fig.7) eingearbeitet sind. Die radial äußeren Ausnehmungen liegen dabei jeweils in Überdeckung mit den drei radial äußeren Befestigungsbohrungen, während die inneren Ausnehmungen jeweils exakt dazwischen liegen, derart, dass an die Enden der Ausnehmungen angelegte Verbindungsgeraden jeweils durch die Drehachse des Mitnehmerblechs verlaufen. Ein gattungsgemäße Mitnehmerblech wird zum Beispiel in JP 2010 281419 A beschrieben.

Aufgabe der Erfindung ist es, ein Mitnehmerblech der gattungsgemäßen Art vorzuschlagen, das bei vergleichbarem Aufwand eine erhöhte Festigkeit bei unverändert elastischen Ausgleichsfunktionen und geringem Bauteilgewicht aufweist.

Die Lösung dieser Aufgabe wird mit den Merkmalen des Patentanspruchs 1 erreicht. Vorteilhafte und besonders zweckmäßige Weiterbildungen der Erfindung sind Gegenstand der Unteransprüche.

Die Erfindung beruht auf dem Kerngedanken, anstelle eines Vollbleches ein Mitnehmerblech mit Durchbrüchen zu verwenden. Das Mitnehmerblech mit den Durchbrüchen ist so auszulegen, dass die folgenden Anforderungen erfüllt sind, nämlich ausreichende Festigkeit zur Übertragung des Motormomentes, geringe Steifigkeit zur Abkopplung von Schwingungen und Bewegungen in den anderen Richtungen, ausreichende Abstützung des Anlasserzahnkranzes sowie Minimierung der akustischen Abstrahlfläche. Erfindungsgemäß wurde erkannt, dass die lagemäßige Anordnung der Ausnehmungen im Mitnehmerblech von entscheidender Bedeutung ist, um die obigen Anforderungen zu erfüllen. So sind gemäß dem kennzeichnenden Teil des Patentanspruches 1 die Ausnehmungen innerhalb und außerhalb von virtuellen Verbindungslinien der radial äußeren Befestigungsbohrungen angeordnet. Gleichzeitig verlaufen diese virtuellen Verbindungslinien tangential sowie in der Nähe zu dem Lochkreis der radial inneren Befestigungsbohrungen. In dem Mitnehmerblech ist zugleich ein ringförmiger Kröpfungsabschnitt eingearbeitet, wobei die Ausnehmungen radial innerhalb und außerhalb relativ nahe an den Kröpfungsabschnitt angrenzen, in diesen aber zur Vermeidung von Verzügen oder Verwindungen bei hoher Drehmoment- oder Wechselbelastung nicht einschneiden. Damit sind zwischen den Befestigungspunkten auf der Abtriebsseite quasi nicht unterbrochene Zugbänder geschaffen, die trotz des durch die Ausnehmungen geschaffenen Leichtbaus und der elastischen Ausgleichs und Dämpfungsfunktion eine erhöhte Torsionsfestigkeit zum radial innen befestigten Antriebsteil herstellen. Die oben genannten virtuellen Verbindungslinien können geradlinig sein oder alternativ Kreisbogenabschnitte sein. Ziel der Verbindungslinien ist im Wesentlichen die Steigerung der Festigkeit durch die direkte Verbindung der äußeren Bohrungen mit den inneren Bohrungen in Schubrichtung.

Im Hinblick auf eine technische Umsetzung muss die spezielle erfindungsgemäße Anordnung der Ausnehmungen beziehungsweise Durchbrüche die folgenden Kriterien erfüllen: So dürfen die Durchbrüche nicht im Bereich der möglichen Kröpfung (Torsion des Kröpfungsquerschnittes aufgrund des Motormomentes) angeordnet sein. Zudem kann eine tangentiale Verbindung der äußeren Anschraubpunkte mit der inneren Anschraubfläche zur Kurbelwelle zum Beispiel bei einer äußeren Dreifachverschraubung ein tragendes Dreieck beziehungsweise bei einer Sechsfachverschraubung einen "Davidsstern" ergeben. Eine Minimierung der Kerbwirkung an den Durchbrüchen kann durch Korbbögen an den Zugbändern erfolgen.

Nachfolgend sind die Merkmale der Erfindung nochmals im Einzelnen hervorgehoben:
So können in einer bevorzugten Verteilung bei drei radial äußeren Befestigungsbohrungen in jedem durch die drei Verbindungslinien gebildeten Segment außerhalb der Verbindungsgeraden zwei symmetrisch ausgerichtete Ausnehmungen vorgesehen sein, während in dem durch die drei Verbindungsgeraden eingeschlossenem, inneren Sektor drei Ausnehmungen eingearbeitet sind, die jeweils zwischen zwei der Verbindungsgeraden positioniert sind.

Des Weiteren können die langlochförmigen Ausnehmungen rotationssymmetrisch gekrümmt ausgeführt und an den Enden mit Rundungen versehen sein, wobei die an die Verbindungslinien angrenzenden Abschnitte der Rundungen abgeflacht, insbesondere als Korbbögen mit unterschiedlichen Krümmungsradien ausgebildet sind. Damit können bei hohen Belastungen gegebenenfalls auftretende Kerbrisse in den an die "Zugbänder" anschließenden Abschnitten der Ausnehmungen vermieden werden.

Vorteilhafterweise sind die radial äußeren Ausnehmungen im Mitnehmerblech innerhalb des durch die äußeren Befestigungsbohrungen gebildeten Lochkreises positioniert, was ebenfalls zu einer erhöhten Steifigkeit mit beitragen kann.

Schließlich kann an dem Mitnehmerblech an dessen rotationssymmetrischen Außenumfang ein Zahnkranz befestigt sein, der zum Starten der

Antriebsmaschine über einen elektrischen Anlassermotor mit einem einspurbaren Antriebsritzel dient.

Ein Ausführungsbeispiel der Erfindung ist im Folgenden anhand der beigefügten, schematischen Zeichnung näher beschrieben. Es zeigen:
- Fig. 1: ein Mitnehmerblech zwischen einem Antriebsflansch einer Antriebsmaschine und einem abtreibenden Zweimassenschwungrad eines Antriebsaggregats für Kraftfahrzeuge in einer Ansicht X der Fig. 2; und
- Fig. 2: das Mitnehmerblech in einem Schnitt gemäß Linie II - II der Fig. 1.

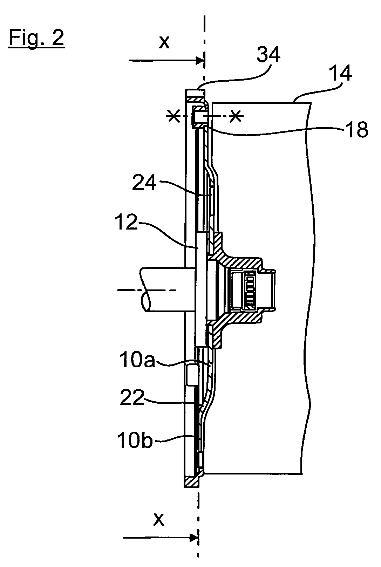

Das dargestellte Mitnehmerblech 10 (Fig. 2) dient zur Drehmomentübertragung zwischen einem Antriebsflansch 12 einer nicht weiter dargestellten Kurbelwelle einer Brennkraftmaschine und einem abtreibenden Zweimassenschwungrad (ZMS) 14 als Eingangselement eines nachgeschalteten Geschwindigkeits-Wechselgetriebes eines Kraftfahrzeugs. Das Eingangselement 14 könnte auch ein Drehmomentwandler, etc. sein.

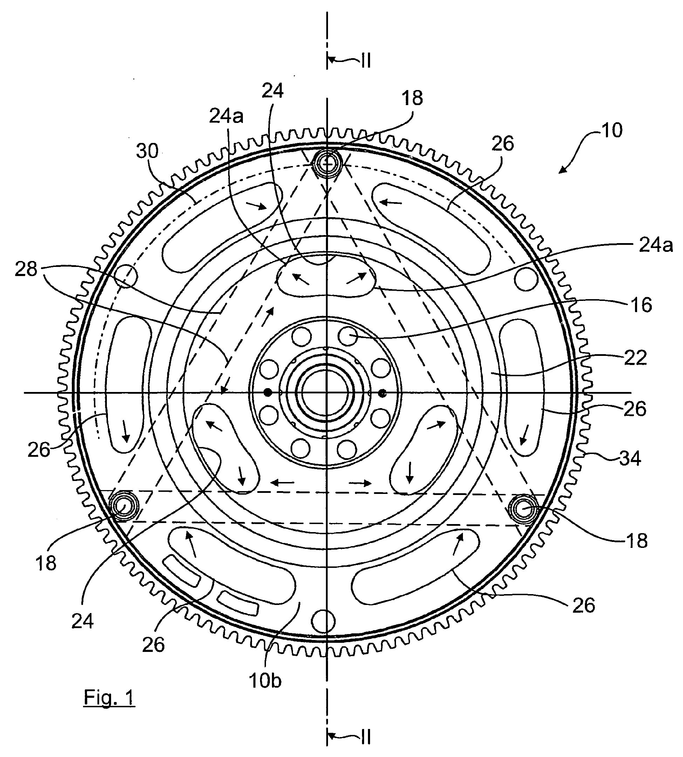

Das rotationssymmetrische Mitnehmerblech 10 (Fig. 1) aus Stahlblech ist über mehrere, radial innenliegende Befestigungsbohrungen 16 und nicht dargestellte Befestigungsschrauben mit dem Antriebsflansch 12 fest verschraubt.

Ferner ist das Mitnehmerblech 10 über drei radial äußere und symmetrisch über den Außenumfang verteilte Befestigungsbohrungen 18 mittels entsprechender Befestigungsschrauben (nicht dargestellt) und Muttern 20 mit dem ZMS 14 fest verbunden.

Das Mitnehmerblech 10 weist etwa mittig zwischen den Lochkreisen der Befestigungsbohrungen 16, 18 einen ringförmigen Kröpfungsabschnitt 22 auf. Der Kröpfungsabschnitt 22 bewirkt, wie aus Fig. 2 ersichtlich ist u.a. einen definierten, axialen Versatz der radial inneren Rotationsebene 10a zur äußeren Rotationsebene 10b.

Radial innerhalb des Kröpfungsabschnitts 22, jedoch außerhalb der Befestigungsfläche mit dem Antriebsflansch 12 sind in der Rotationsebene 10a des Mitnehmerblechs 10 drei in Umfangsrichtung ausgerichtete und symmetrisch verteilte Ausnehmungen 24 eingearbeitet, die wie aus Fig. 1 ersichtlich ist nahe an den Kröpfungsabschnitt 22 angrenzen.

Ferner sind radial außerhalb des Kröpfungsabschnitts 22 in der Rotationsebene 10b sechs ebenfalls in Umfangsrichtung langlochförmig ausgeführte und symmetrisch verteilte Ausnehmungen 26 vorgesehen, die wiederum jeweils nahe an den Kröpfungsabschnitt 22 angrenzen, jedoch nicht in diesen einschneiden.

Die Ausnehmungen 24, 26 sind zunächst so verteilt, dass virtuelle Verbindungslinien (dargestellt in gestrichelten Linien 28) zwischen den abtreibenden Befestigungspunkten (Befestigungsbohrungen 18) gebildet sind, die durch die Ausnehmungen 24, 26 nicht unterbrochen sind bzw. quasi in Umfangsrichtung versteifend wirkende Zugbänder 28 bilden. Die Verbindungslinien 28 sind in der Fig. 1 beispielhaft geradlinig. Die Verbindungslinien 28 müssen jedoch nicht zwangsläufig geradlinig sein. Vielmehr können die Verbindungslinien 28 auch Kreisbogenabschnitte mit entsprechend großen Radien sein.

Die Zugbänder 28 schließen dabei einen dreieckförmigen, inneren Sektor der Rotationsebene 10a mit der Befestigungsfläche des Antriebsflansches 12 ein, wobei wie aus Fig. 1 ersichtlich ist jeweils eine Ausnehmung 24 zwischen zwei Zugbändern 28 an diese angrenzend positioniert ist.

Des Weiteren unterteilen die Zugbänder 28 die radial außenliegenden Bereiche der Rotationsebene 10b in drei Segmente ein, in denen jeweils zwei zueinander beabstandete Ausnehmungen 26 angeordnet sind, die an die Zugbänder 28 angrenzen.

Die Enden der rotationssymmetrisch gekrümmt ausgeführten Ausnehmungen 24, 26 sind mit halbkreisförmigen Rundungen ausgeführt, wobei jedoch die an die Zugbänder 28 unmittelbar angrenzenden Abschnitte 24a, 26a (jeweils mit einem kleinen Pfeil gekennzeichnet) abgeflacht bzw. als Korbbögen mit zunehmenden und wieder abnehmenden Krümmungsradien ausgeführt sind, um in diesen Bereichen Kerbrissen bei hohen Drehmoment- oder Wechselbelastungen entgegenzuwirken.

Die Ausnehmungen 26 liegen zudem mit geringem, radialen Abstand innerhalb des durch die Befestigungsbohrungen 18 verlaufenden Lochkreises 30.

Am Außenumfang des Mitnehmerblechs 10 ist in nicht näher dargestellter Weise ein Zahnkranz 34 befestigt, der zum Starten der Brennkraftmaschine über einen elektrischen Startermotor und ein einspurbares Zahnritzel dient.

Die Erfindung ist nicht auf das dargestellte Ausführungsbeispiel beschränkt. Insbesondere können gegebenenfalls auch mehr als drei Befestigungsbohrungen 18 auf dem Lochkreis 30 vorgesehen sein, mit entsprechend der angegebenen Lehre verteilten Ausnehmungen 24, 26.

Gegebenenfalls kann das Mitnehmerblech 10 auch ohne einen Kröpfungsabschnitt 22 ausgeführt sein.

## Patentansprüche

1. Mitnehmerblech zur Drehmomentübertragung zwischen einem antreibenden Teil, insbesondere der Kraftabgabewelle einer Antriebsmaschine, und einem abtreibenden Teil, insbesondere einem Drehschwingungsdämpfer, einer Kupplung und/oder einem Drehmomentwandler in Kraftfahrzeugen, wobei das Mitnehmerblech (10) an einem radial inneren Bereich über mehrere, umfangsversetzte Befestigungsbohrungen (16) an einem Antriebsflansch (12) und über zumindest drei, radial äußere Befestigungsbohrungen (18) an dem abtreibenden Teil befestigt ist und wobei das Mitnehmerblech (10) zwischen den Befestigungsbohrungen (16, 18) mit umfangsverteilten, in Umfangsrichtung im Wesentlichen langlochförmig ausgerichteten Ausnehmungen (24, 26) versehen ist, wobei die Ausnehmungen (24, 26) innerhalb und außerhalb von virtuellen Verbindungslinien (28) der radial äußeren Befestigungsbohrungen (18), die tangential in der Nähe zum Lochkreis der Befestigungsbohrungen (16) laufen, angeordnet sind, und wobei in das Mitnehmerblech ein ringförmiger Kröpfungsabschnitt (22) eingearbeitet ist, **dadurch gekennzeichnet, dass** die Ausnehmungen (24, 26) sowohl radial innerhalb als auch außerhalb relativ nahe an den Kröpfungsabschnitt (22) angrenzen.

2. Mitnehmerblech nach Anspruch 1, **dadurch gekennzeichnet, dass** bei drei radial äußeren Befestigungsbohrungen (18) in jedem durch die drei Verbindungslinien (28) gebildeten Segment außerhalb der Verbindungslinien (28) zwei symmetrisch ausgerichtete Ausnehmungen (26) vorgesehen sind.

3. Mitnehmerblech nach Anspruch 1 oder 2, **dadurch gekennzeichnet, dass** bei drei radial äußeren Befestigungsbohrungen (18) in dem durch die drei Verbindungslinien (28) eingeschlossenem Sektor drei Ausnehmungen (24) eingearbeitet sind, die jeweils umfangsverteilt zwischen zwei der Verbindungsgeraden (28) positioniert sind.

4. Mitnehmerblech nach einem der vorhergehenden Ansprüche, **dadurch gekennzeichnet, dass** die langlochförmigen Ausnehmungen (24, 26) rotationssymmetrisch gekrümmt ausgeführt und an den Enden mit Rundungen versehen sind, und dass insbesondere die an die Verbindungslinien (28) angrenzenden Abschnitte (24a, 26a) der Rundungen abgeflacht ausgebildet sind.

5. Mitnehmerblech nach Anspruch 4, **dadurch gekennzeichnet, dass** die besagten Abschnitte (24a, 26a) als Korbbögen ausgeführt sind.

6. Mitnehmerblech nach einem der vorhergehenden Ansprüche, **dadurch gekennzeichnet, dass** die radial äußeren Ausnehmungen (26) innerhalb des durch die äußeren Befestigungsbohrungen (18) gebildeten Lochkreises (30) positioniert sind.

7. Mitnehmerblech nach einem der vorhergehenden Ansprüche, **dadurch gekennzeichnet, dass** an dessen rotationssymmetrischen Außenumfang ein Zahnkranz (34) befestigt ist, der zum Starten der Antriebsmaschine über einen elektrischen Anlassermotor mit einem Antriebsritzel dient.

## Claims

1. A driver plate for torque transmission between a driving part, in particular an output shaft of a driving engine, and a driven part, in particular a torsional vibration damper, a clutch and/or a torque converter in a motor vehicle, wherein the driver plate (10) is mounted on a drive flange (12) in a radially inner area by means of several fastening bores (16) that are offset from the circumference and is mounted on the driven part by means of at least three radially outer fastening bores (18), and wherein the driver plate (10) is provided with circumferentially distributed recesses (24, 26) between the fastening bores (16, 18), the recesses being in the shape of elongated holes and substantially oriented in the circumferential direction, wherein the recesses (24, 26) are arranged inside and outside of virtual connecting lines (28) of the radially outer fastening bores (18), the connecting lines running tangentially near the pitch circle of the fastening bores (16), and wherein a ring-shaped offset section (22) is incorporated in the driver plate, **characterized in that** the recesses (24, 26) adjoin relatively closely the offset section (22) both radially inside and outside.

2. The driver plate according to claim 1, **characterized in that** two symmetrically oriented recesses (26) are provided in each segment formed of the three connecting lines (28) of the three radially outer fastening bores (18) and are outside the connecting lines (28).

3. The driver plate according to claim 1 or 2, **characterized in that** three recesses (24) are incorporated in a respective sector enclosed by the three connecting lines (28) of the three radially outer fastening bores (18), the recesses being positioned circumferentially distributed between two of the connecting lines (28).

4. The driver plate according to any of the preceding claims, **characterized in that** the recesses (24, 26) are in the shape of elongated holes, are configured curved in a rotationally symmetric manner and have rounded ends and, in particular, sections (24a, 26a) of the rounded ends adjoining the connecting lines (28) are flattened.

5. The driver plate according to claim 4, **characterized in that** sections (24a, 26a) are configured as basket arches.

6. The driver plate according to any of the preceding claims, **characterized in that** the radially outer recesses (26) are arranged inside the pitch circle (30) formed by the outer fastening bores (18).

7. The driver plate according to any of the preceding claims, **characterized in that** a gear rim (34) is mounted on the rotationally symmetric outer circumference of the driver plate, the gear rim being provided for starting the driving engine using an electric starter motor having a drive pinion.

## Revendications

1. Disque d'entraînement pour transfert de couple de torsion entre une partie menée, en particulier l'arbre de sortie d'énergie d'un moteur de commande, et une partie menante, en particulier un amortisseur d'oscillations en rotation, un couplage et/ou un convertisseur de couple dans les voitures automobiles, dans lequel le disque d'entraînement (10) est fixé dans une zone radialement interne via plusieurs trous de fixation (16) décalés sur la périphérie sur une bride menée (12) et via au moins trois trous de fixation radialement externes (18) sur la partie menante et dans lequel le disque d'entraînement (10) est pourvu, entre les trous de fixation (16, 18), de cavités (24, 26) distribuées sur la périphérie et orientées dans la direction périphérique sensiblement en forme de trous oblongs, dans lequel les cavités (24, 26) sont ménagées à l'intérieur et à l'extérieur de lignes de liaison virtuelles (28) des trous de fixation radialement externes (18), qui s'étendent tangentiellement au voisinage du cercle de trous de fixation (16), et dans lequel est ménagée dans le disque d'entraînement une section de coudage (22), **caractérisé en ce que** les cavités (24, 26) sont relativement voisines de la section de coudage (22) radialement autant vers l'intérieur que vers l'extérieur.

2. Disque d'entraînement selon la revendication 1, **caractérisé en ce que**, dans le cas de trois trous de fixation radialement externes (18), il est prévu dans chaque segment formé par les trois lignes de liaison (28) à l'extérieur des lignes de liaison (28) deux cavités orientées symétriquement (26).

3. Disque d'entraînement selon la revendication 1 ou 2, **caractérisé en ce que**, dans le cas de trois trous de fixation radialement externes (18), on ménage dans le secteur inclus par les trois lignes de liaison (28) trois cavités (24) qui sont respectivement positionnées réparties sur la périphérie entre deux des lignes de liaison (28).

4. Disque d'entraînement selon l'une quelconque des revendications précédentes, **caractérisé en ce que** les cavités en forme de trous oblongues (24, 26) se présentent sous forme courbe à symétrie de révolution et sont pourvues aux extrémités d'arrondis et **en ce que** en particulier les sections (24a, 26a) des arrondis avoisinant les lignes de liaison (28) sont conformées à plat.

5. Disque d'entraînement selon la revendication 4, **caractérisé en ce que** lesdites sections (24a, 26a) sont conçues en anses de panier.

6. Disque d'entraînement selon l'une quelconque des revendications précédentes, **caractérisé en ce que** les cavités radialement externes (26) sont positionnées à l'intérieur du cercle de trous (30) formé par les trous de fixation externes (18).

7. Disque d'entraînement selon l'une quelconque des revendications précédentes, **caractérisé en ce que** sur sa périphérie externe à symétrie de révolution est fixée une couronne dentée (34) qui sert au démarrage du moteur de commande via un moteur de démarrage électrique avec un pignon menant.
